# EUROPEAN PATENT APPLICATION

(11) **EP 3 683 472 A1**
(43) Date of publication of application: **22.07.2020**
(21) Application number: 18857144.2
(22) Date of filing: 07.09.2018
(51) Int. Cl.: F16F 15/02

(54) **SEISMIC ISOLATION DEVICE**

(30) Priority: 14.09.2017 JP 2017176538
(71) Applicant: Oiles Corporation, Tokyo 108-0075 (JP)
(72) Inventor: SUZUKI, Kiyoharu, Fujisawa-shi Kanagawa 252-0811 (JP); ARAMIZU, Teruo, Ashikaga-shi Tochigi 326-0327 (JP); KITABAYASHI, Ryota, Ashikaga-shi Tochigi 326-0327 (JP); IRISAWA, Yuta, Ashikaga-shi Tochigi 326-0327 (JP)
(74) Representative: Fechner, Thomas
(86) International application number: PCT/JP2018/033261
(87) International publication number: WO 2019/054302

(57) **Abstract**

To provide a seismic isolation device capable of achieving preferable seismic isolation performance even under a low temperature condition and increasing merchantability. A seismic isolation device 1 includes upper and lower spherical panels 10, 10 and a sliding body 20. The sliding body 20 includes a base portion 21 and upper and lower sliding members 22, 22 formed on the respective upper and lower end portions of the base portion 21. On the sliding surface 22a of each sliding member 22, multiple holes h0 to h6 are formed, and the multiple holes h0 to h6 are filled with solid lubricant material 23. The holes h1 to h6 are non-linearly disposed in a direction along a straight line H, so that the width (S3 to S2) between a maximum value and a minimum value on a curved line indicating a change in the sum SumL of the distances traversing the holes h1 to h6 in respective directions with the center hole h0 as a reference is small, as compared with a case in which the holes h1 to h6 are linearly disposed in the direction along the straight line H.

## Description

### Technique Field

The present invention relates to a seismic isolation device to be disposed between an upper structure and a lower structure to prevent vibration in the horizontal direction (lateral vibration) from being transmitted from the lower structure, such as a floor, to the upper structure, such as a rack.

### Background Art

The present applicant has already suggested a seismic isolation device disclosed in Patent Literature 1 as a seismic isolation device. The seismic isolation device illustrated in FIG. 3 of the Literature has upper and lower support members and a sliding component disposed between the upper and lower support members so as to be relatively slidable. On the upper surface of the upper support member, an upper structure, such as a rack, is secured. On the lower structure of the upper support member, an upwardly concave spherical sliding surface is formed. On the surface of the sliding surface, a lubricant film is formed. The composition of the lubricant film includes epoxy resin, hardener, reactive silicone oil having an epoxy base, and triazine thiol.

The lower support member is securely mounted on a lower structure, such as a floor, and has a downwardly concave spherical sliding surface formed on its upper surface. The curvature of the sliding surface is the same as that of the sliding surface of the upper support member. A lubricant film having the same composition as that of the sliding surface of the upper support member is formed on the sliding surface as well.

Further, the sliding component includes a base portion and a pair of upper and lower sliding members that are embedded in the respective upper and lower surfaces of the base portion so as to be flush with the upper and lower surfaces. Each of the upper and lower sliding members is formed into a shape of an upwardly convex spherical surface. The respective upper and lower sliding members abut on the respective sliding surfaces of the upper and lower support members via these respective surfaces. The curvatures of these surfaces are set to be the same as those of the respective sliding surfaces of the upper and lower support members.

With the above-described structure, in this seismic isolation device, the sliding component in plane contact with the respective upper and lower support members repetitively slides in a reciprocative manner relative to the upper and lower support members when horizontal vibration is inputted to the lower structure. This makes it possible to prevent the horizontal vibration from being transmitted from the lower structure to the upper structure.

### Citation List

### Patent Literature

Patent Literature 1: Japanese Patent Application Laid-Open No. 2010-54050

### Summary of Invention

### Technical Problem

An experiment conducted by the present application has proved that, according to the seismic isolation device in the above-mentioned Patent Literature 1, in the case where the sliding component is placed in plane contact with the upper and lower support members and is relatively slid in a reciprocative manner in the horizontal direction relative to the upper and lower support members, the kinetic friction coefficient increases under a significantly lower temperature condition (for example, -25°C) than normal temperature, and the seismic isolation performance drops, although the seismic isolation performance does not drop under a normal temperature condition (refer to Table 1 to be referred to later). This phenomenon is presumed to be caused because the silicon oil of the respective lubricant films of the upper and lower support members are scrubbed out from the abutting surfaces between the sliding component and the respective upper and lower support members to outside due to the reciprocating sliding of the sliding component under a low temperature condition. For the above-described reason, there is a problem in that the seismic isolation device disclosed in Patent Literature 1 cannot be used under a low temperature condition, and the merchantability of the seismic isolation device is low.

The present invention has been conceived in order to address the above-described problem, and aims to provide a seismic isolation device that can attain preferable seismic isolation performance even under a low temperature condition and thereby increase merchantability.

### Solution to Problem

In order to achieve the above-described object, an invention according to claim 1 relates to a seismic isolation device to be disposed between an upper structure and a lower structure, the seismic isolation device including an upper support member and a lower support member disposed so as to be opposed to each other and having lubricant films formed on the respective opposed surfaces thereof; and a sliding component disposed between and in plane contact with the upper support member and the lower support member, the sliding component being slidable relative to the upper support member and the lower support member, wherein the sliding component includes a base portion; an upper sliding member disposed on the upper end portion of the base portion so as to be in plane contact with the upper support member, the upper sliding member having multiple storage portions that are open on an abutment surface that abuts on the upper support member, the multiple storage portions being filled with lubricant material; and a lower sliding member disposed on the lower end portion of the base portion so as to be in plane contact with the lower support member, the lower sliding member having multiple storage portions that are open on an abutment surface that abuts on the lower support member, the multiple storage portions being filled with lubricant material.

According to this seismic isolation device, the upper support member and the lower support member are disposed so as to be opposed to each other, and the sliding component, which is slidable relative to the upper support member and the lower support member, is disposed between the upper support member and the lower support member so as to be in plane contact with the upper support member and the lower support member. With the above, when vibration in the horizontal direction is inputted into the lower structure, the sliding component slides relative to the upper support member and the lower support member, whereby the vibration in the horizontal direction can be prevented from being transmitted from the lower structure to the upper structure. In the above, in the case where the seismic isolation device is installed under a low temperature condition, as described above, the repetitive reciprocating sliding of the sliding component possibly causes the lubricant agent in the lubricant films of the upper support member and the lower support member to be scrubbed out from the respective abutting surfaces between the sliding component and the upper support member and the lower support member to outside. To address the above, according to this seismic isolation device, as the respective upper sliding member and the lower sliding member of the sliding component have multiple storage portions that are open on the respective abutting surfaces that respectively abut on the upper support member and the lower support member, and the multiple storage portions are filled with lubricant material, even if a situation occurs in which the lubricant agent of the lubricant film is scrubbed out from the respective abutting surfaces between the sliding component and the upper support member and the lower support member to outside, it is possible to ensure a sufficient lubricating effect on the respective abutting surfaces abutting on the upper support member and the lower support member thanks to the lubricant material filled in the multiple storage portions of the upper sliding member and the lower sliding member. With the above, it is possible to prevent an increase in a coefficient of friction, and thus to obtain preferable seismic isolation performance.

According to an invention according to claim 2, in the seismic isolation device according to claim 1, the multiple storage portions on the abutting surface of at least one of the upper sliding member and the lower sliding member may include one storage portion disposed at a reference point of the one abutting surface and an n number (n being two or more) of storage portion groups including a plurality of storage portions equidistantly disposed along the n number of respective circles with the reference point as the center, and at least one set of the storage portions each selected from each of the n number of storage portion groups may be non-linearly disposed in at least one direction with the reference point as a reference, so that the width between a maximum value and a minimum value on a curved line indicating a change in the sum of the distances traversing the storage portions in respective directions with the reference point as a reference is small, as compared with a case in which the one set of storage portions is linearly disposed in the at least one direction.

According to this seismic isolation device, the multiple storage portions on the abutting surface of at least one of the upper sliding member and the lower sliding member includes one storage portion disposed at a reference point of the one abutting surface and an n number (n being two or more) of storage portion groups including a plurality of storage portions equidistantly disposed on the n number of respective circles with the reference point as the center. Further, at least one set of storage portions each selected from each of the n number of storage portion groups is non-linearly disposed in at least one direction with the reference point as a reference, so that the width between a maximum value and a minimum value on a curved line indicating a change in the sum of the distances passing through the storage portions in the respective directions with the reference point as a reference is small, as compared with a case in which the set of storage portions is linearly disposed in the at least one direction. With the above, when the sliding component slides in the respective directions, it is possible to have the lubricant material filled in the storage portions evenly spread over the abutting surface, and thus to ensure more preferable lubricating performance, as compared with a case in which the set of the storage portions is linearly disposed in the at least one direction.

According to an invention according to claim 3, in the seismic isolation device according to claim 2, reference storage portions that make references for some storage portion groups of the n number of storage portion groups may be linearly disposed on a reference line that extends in a diameter direction while passing through the reference point of the one abutting surface, reference storage portions that make references for storage portion groups of the n number of storage portion groups other than the some storage portion groups may be disposed so as to be displaced relative to the reference line in the circumferential direction by respective amounts corresponding to a plurality of mutually different predetermined angles, and the plurality of predetermined angles may be defined such that the one set of storage portions is non-linearly disposed in the one direction.

According to this seismic isolation device, reference storage portions that make references for some of the storage portion groups of the n number of storage portion groups are linearly disposed on a reference line extending in the diameter direction while passing through the reference point of one abutting surface, and reference storage portions that make references for the storage portion groups other than the some storage portion groups are disposed so as to be displaced from the reference line in the circumferential direction by respective amounts corresponding to a plurality of mutually different predetermined angles, in which these plurality of predetermined angles are defined such that the one set of storage portions is non-linearly disposed in the one direction. As described above, some reference storage portions are linearly disposed on the reference line, while other reference storage portions are disposed so as to be displaced from the reference line in the circumferential direction by a plurality of mutually different respective predetermined angles. With the above, it is possible to implement a seismic isolation device that produces the advantageous effect according to the invention according to claim 2.

### Brief Description of Drawings

FIG. 1A is a plan view of a seismic isolation device according to an embodiment of the present invention.
FIG. 1B is a front view of the seismic isolation device.
FIG. 1C is a cross sectional view along the line E-E in FIG. 1A.
FIG. 2A is a plan view of a lower spherical panel.
FIG. 2B is a cross sectional view along the line F-F in FIG. 2A.
FIG. 3A is a plan view of a base portion of a sliding body.
FIG. 3B is a front view of the base portion of the sliding body.
FIG. 4A is a plan view of a sliding member of a sliding body.
FIG. 4B is a front view of the sliding member of the sliding body.
FIG. 5 is a cross sectional view along the ling G-G in FIG. 4A.
FIG. 6 is an enlarged view of the section I in FIG. 4A.
FIG. 7 is a diagram illustrating the lengths L0 to L6 of parts of a straight line H' the parts traversing holes h0 to h6.
FIG. 8 illustrates a curved line indicating a change in the sum SumL of the traversing lengths.

### Description of Embodiments

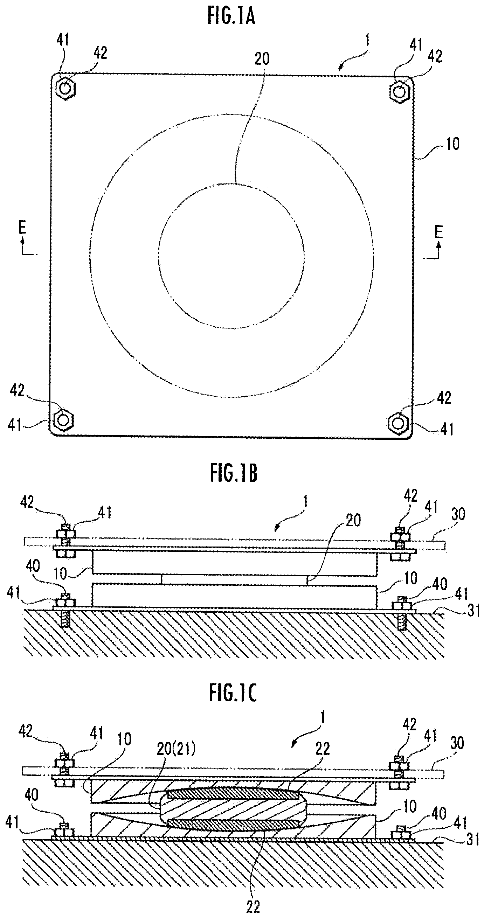

In the following, a seismic isolation device according to an embodiment of the present invention will be described with reference to the drawings. A seismic isolation device in this embodiment is applied to a rack of an automatic freezing storage, and specifically disposed between a rack 30 (an upper structure) and a floor 31 (a lower structure), as illustrated in FIG. 1A to FIG. 1C.

The seismic isolation device 1 includes a pair of upper and lower spherical panels 10, 10 (an upper support member and a lower support member) and a sliding body 20 (a sliding component) disposed between these spherical panels 10, 10. In the case of this seismic isolation device 1, as the upper and lower spherical panels 10, 10 have identical structures, the lower spherical panel 10 will be described below as an example.

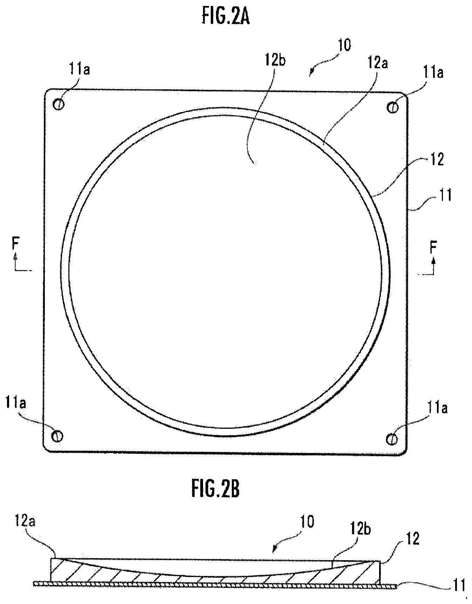

The lower spherical panel 10 is made of metal (for example, stainless) and mortar combined, and has a mount portion 11 and a support portion 12, as illustrated in FIG. 2A and FIG. 2B. The mount portion 11 is a metal panel in a rectangular shape in a plan view, with four bolt holes 11a formed at the four respective corners of the mount portion 11. The lower spherical panel 10 is secured onto the floor 31 with an anchor bolt 40 embedded in the floor 31, passing through the bolt hole 11a, and threaded with a nut 41 to be thereby fastened.

The support portion 12 is a disk-like member concentric with the mount portion 11 and projecting upward from the mount portion 11. The support portion 12 is made by filling mortar into the inside of a thin hollow metal member. The outer diameter of the support portion 12 is set to have a smaller dimension than the outer diameter of the mount portion 11. The top surface of the support portion 12 includes an annular frame surface 12a and a spherical sliding surface 12b recessed downward from the frame surface 12a. On the surface of the sliding surface 12b, a lubricant film (not illustrated) is formed. The composition of the lubricant film includes fluorine resin, silicone oil, and triazine thiol.

Meanwhile, the upper spherical panel 10 is secured to the rack 30 with a bolt 42 and a nut 41 such that the top surface of the mount portion 11 is in contact with the rack 30.

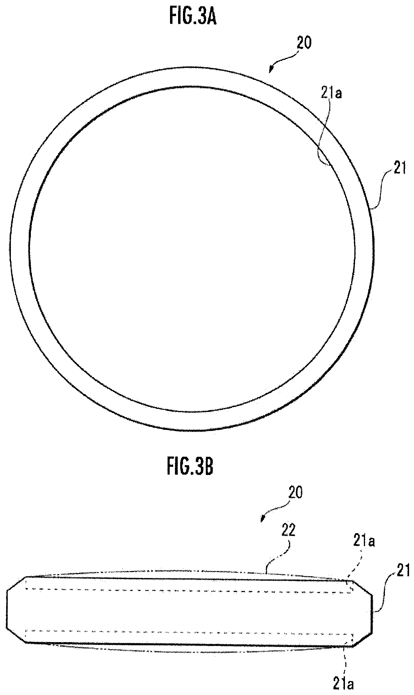

Also, the sliding body 20 is slidably disposed between the spherical panels 10, 10. The sliding body 20 includes a base portion 21 and a pair of upper and lower sliding members 22, 22. The base portion 21 is a metal (for example, aluminum alloy) disk-like object having round openings 21a, 21a on its respective upper and lower end portions (refer to FIG. 3A and FIG. 3B). These round openings 21a, 21a are concentric with the base portion 21 and plane symmetric to each other.

In these round openings 21a, 21a, the respective upper and lower sliding members 22, 22 are inserted. As the upper and lower sliding members 22, 22 have the same structures, the upper sliding member 22 will be described below as an example. The upper sliding member 22 is made of synthetic resin formed through compression molding and subsequent sintering of polytetrafluoroethylene (PTFE), glass fibers, and polyimide powder as materials.

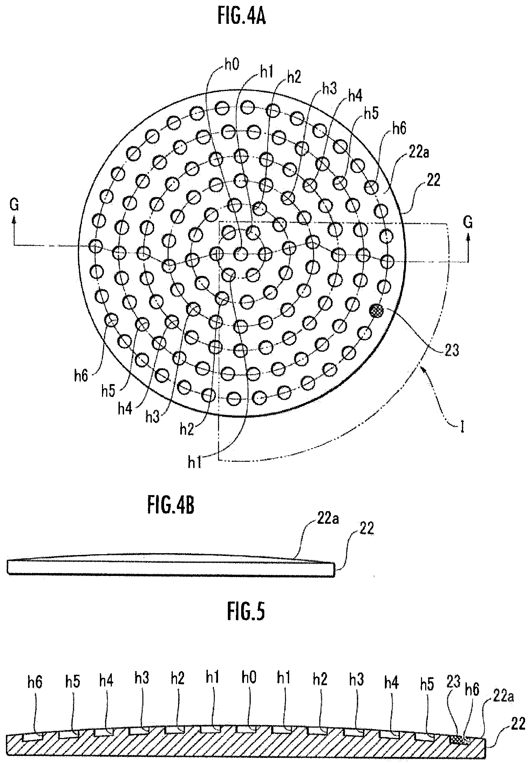

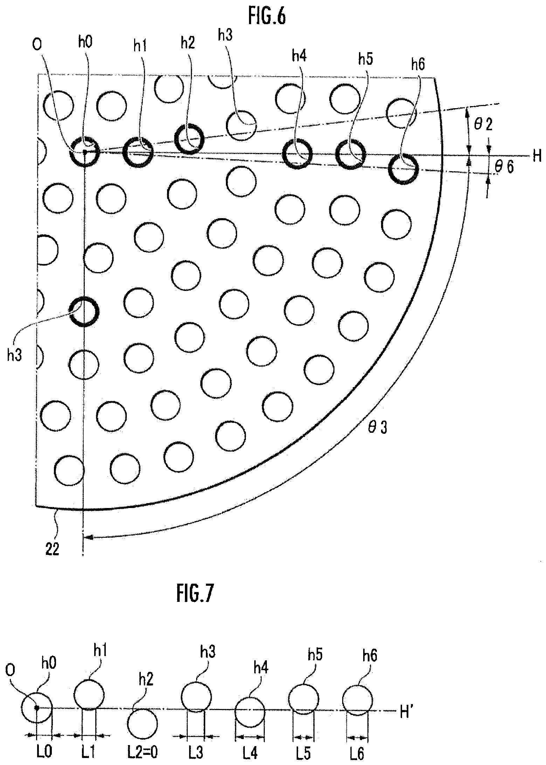

As illustrated in FIG. 4A, FIG. 4B, and FIG. 6, the upper sliding member 22 is a disk-like member whose lower surface is flat and upper surface constitutes an upwardly convex spherical sliding surface 22a (an abutting surface). The curvature of the sliding surface 22a is set to be the same as that of the sliding surface 12b of the spherical panel 10. The outer diameter of the upper sliding member 22 is set to be the same as the diameter of the round opening 21a of the base portion 21, and the height of the frame portion of the upper sliding member 22 is set slightly higher than the depth of the round opening 21a. With the above-described structure, the upper sliding member 22 is tightly fit in the round opening 21a of the base portion 21 such that the sliding surface 22a projects slightly from the frame portion of the round opening 21a (refer to FIG. 1C and FIG. 3B).

On the sliding surface 22a, there are formed one hole h0 concentric with the center point O (a reference point) of the sliding surface 22a, a first hole group including six holes h1 in total, a second hole group including twelve holes h2 in total, a third hole group including eighteen holes h3 in total, a fourth hole group including twenty-four holes h4 in total, a fifth hole group including thirty holes h5 in total, and a sixth hole group including thirty-six holes h6 in total. These first to sixth hole groups are disposed on six respective circles that are concentric with the center point O and equidistantly defined in the diameter direction. The respective holes of each group are aligned equidistantly in the circumferential direction.

Further, the above-mentioned holes h0 to h6 (storage portions) are round holes having the same diameter and open on the sliding surface 22a. All the holes h0 to h6 are filled with solid lubricant material 23 (only one illustrated in FIG. 4A and FIG. 5). The solid lubricant material 23 (lubricant material) is filled such that its surface projects slightly from the sliding member 22 (or flush with the sliding surface 22a) and is in contact with the sliding surface 12b of the upper spherical panel 10.

The solid lubricant material 23 is made through melt mixing of melamine cyanurate, PTFE, silicone wax, and silicone oil as materials and subsequent press-molding into a lubricant sheet before cutting-out into a round shape from the lubricant sheet.

Also, as illustrated in FIG. 6, the reference holes h1 to h6 (rimmed with a thicker line), serving as references for the respective first to sixth hole groups, are set such that the respective reference angles θ1 to θ6 relative to a reference line H are as described below. That is, assuming that an angle clockwise relative to the reference line H is of a positive value, the reference angles θ1 to θ6 are set to respective predetermined angles that hold θ1=θ4=θ5=0, θ2<0<θ6<θ3 (=π/2). This setting results in non-linear disposition of the set of holes h1 to h6 near the reference line H in a direction along the reference line H. This is employed because of the reason below.

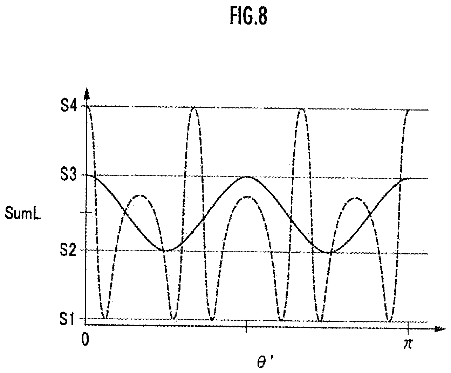

That is, as illustrated in FIG. 7, assuming that a straight line H' extends from the center point O of the sliding surface 22a of the upper sliding member 22 in the diameter direction, and that the respective lengths of the parts of the straight line H', the parts traversing the respective openings of the holes h0 to h6 (hereinafter referred to as "a traversing length") are defined as L0 to L6, the sum SumL of these traversing lengths holds SumL=L0+L1+L2+L3+L4+L5+L6. Assuming that the straight line H' is rotated clockwise by 180° from the position of the reference line H illustrated in FIG. 6 as 0°, a curved line that indicates a change in the sum SumL of the traversing lengths shows as one drawn with a solid line in FIG. 8, for example. In this case, the sum SumL of the traversing lengths corresponds to the sum of the lengths of the distances traversing the respective holes h0 to h6 in the respective directions with the center point O as a reference.

In this drawing, the abscissa θ' indicates the angle of rotation of the straight line H', and S1 to S4 are predetermined values of the sum SumL that hold S1<S2<S3<S4. Also, in this drawing, a curved line drawn with a broken line indicates, for comparison, a change in the sum SumL of the traversing lengths in the case where the holes h1 to h6 are disposed such that their centers are positioned on the reference line H, that is, where the respective reference holes h1 to h6 are linearly disposed.

As is obvious from the comparison between these cases, in the case of the seismic isolation device 1 in this embodiment, it is known that the width (S3 to S2) between a maximum value S3 and a minimum value S2 on the curved line of the sum SumL of the traversing lengths is smaller than the width (S4 to S1) between a maximum value S4 and a minimum value S1 with the reference holes h1 to h6 all concentrically disposed on the reference line H. Consequently, when the sliding body 20 slides, it is possible to have the solid lubricant material 23 filled in the holes h0 to h6 evenly spread over the sliding surface 22a, compared with the case where the reference holes h1 to h6 are all linearly disposed in a direction along the reference line H. In order to obtain this effect, the set of holes h1 to h6 near the reference line H is non-linearly disposed in a direction along the reference line H.

According to the seismic isolation device 1 having the above-described structure, when horizontal vibration is inputted to the floor 31, for example, due to earthquakes, the sliding body 20 and the upper and lower spherical panels 10, 10 slide relative to each other, which makes it possible to prevent the horizontal vibration from being transmitted from the floor 31 to the rack 30.

In the above, multiple holes h0 to h6 are formed on the respective sliding surfaces 22a, or abutting surfaces which abut on the respective upper and lower spherical panels 10, of the upper and lower sliding members 22 of the sliding body 20, and the multiple holes h0 to h6 are filled with the solid lubricant material 23. Thus, even if a situation should occur in which the lubricant agent of the lubricant films of the upper and lower spherical panels 10 is scrubbed out from the abutting surfaces where the sliding body 20 abuts on the upper and lower spherical panels 10 to outside under a low temperature condition, it is possible to obtain a sufficient lubricating effect on the abutting surfaces between the sliding body 20 and the respective upper and lower spherical panels 10 thanks to the solid lubricant material 23 filled in the multiple holes h0 to h6 of the upper and lower sliding members 22. This makes it possible to prevent an increase in a coefficient of friction even under a low temperature condition, so that preferable seismic isolation performance can be obtained.

Also, because the set of holes h1 to h6 near the reference line H is non-linearly disposed in a direction along the reference line H as a result of the above-described setting for the reference angles θ1 to 06, the width (S3 to S2) between a maximum value S3 and a minimum value S2 on the curved line indicating the sum SumL of the traversing lengths can be smaller than that in a case where the reference holes h1 to h6 are all disposed concentrically on the reference line H. This makes it possible to have the solid lubricant material 23 filled in the holes h0 to h6 evenly spread over the abutting surface 22a when the sliding body 20 slides, compared with a case in which the reference holes h1 to h6 are all linearly disposed in a direction along the reference line H, so that more preferable lubricating performance can be obtained.

Below, a test result for sliding characteristics of the above-described seismic isolation device 1 will be described. This sliding characteristics test was conducted as follows. That is, a sliding member for a test, or a sliding member 22 whose sliding surface 22a has been changed from a spherical surface to a flat surface, and a sliding panel for the test, or a spherical panel 10 whose sliding surface 12b has been changed from a spherical surface to a flat surface, were prepared, and the sliding member was mounted on the sliding surface of the sliding panel with the sliding surface of the sliding member facing down.

Then, under a normal temperature condition (for example, 15°C) and a low temperature condition (for example, -25°C), the sliding member was caused to slide in a reciprocative manner on the sliding panel by a predetermined width (for example, a few tens of centimeters) at a predetermined speed (a few tens of centimeters per second) with a predetermined load applied thereto from above. Thereafter, when the total distance of the reciprocating sliding comes to be of a predetermined value (for example, a few tens of meters), the reciprocating sliding was ended, and the amount of change in the kinetic friction coefficient from the start to the end of the reciprocating sliding (that is, the amount of increase) was measured. This result of measurement will be hereinafter referred to as "a present invention result". Also, for comparison, using a sliding member and a sliding panel for a comparison test that have the same structures as those in Patent Literature 1, the amount of change in the kinetic friction coefficient was measured according to the same manner for the test as described above. This result of measurement will be hereinafter referred to as "a conventional result".

The table 1 below shows the test results for sliding characteristics mentioned above.

**[Table 1]**

| | Present invention result | Conventional result |
|---|---|---|
| Amount of change at normal temperature | No change | No change |
| Amount of change at low temperature | 0.004 | 0.052 |

Referring to the Table 1, it is known that the kinetic friction coefficient rarely varies in both the present invention result and the conventional result under a normal temperature condition. Also, under a low temperature condition, the present invention result shows that the value of the amount of change in the kinetic friction coefficient is 0.004, and it is thus known that the kinetic friction coefficient rarely varies. In contrast, the conventional result shows that the value of the amount of change in the kinetic friction coefficient is 0.052, and it is thus known that the kinetic friction coefficient increases large, compared with the present invention result. That is, it is known that the seismic isolation device 1 according to the embodiment can provide high seismic isolation performance under a low temperature condition, compared with a seismic isolation device disclosed in Patent Literature 1.

Note that although the embodiment concerns an example in which an upper sliding member and a lower sliding member that are round in a plan view are used, the shape in a plan view of the upper sliding member and the lower sliding member of the present invention is not limited to a round, and the upper sliding member and the lower sliding member may be set to have a shape other than a round. For example, the shape in a plan view of the upper sliding member and the lower sliding member may be set to a polygonal shape, such as a hexagon.

Also, although the embodiment concerns an example in which a round hole is used as a storage portion, the storage portion of the present invention is not limited to a round hole, and any shape that allows a lubricant material to be filled therein is applicable. For example, a triangular or more angular hole or an oval hole may be used as a storage portion. A pore may be used instead of a hole, or a combination of a hole and a pore may be used.

Further, although the embodiment concerns an example in which the hole h0, or one storage portion, and six hole groups, or the n number of storage portion groups, are formed on both the abutting surface of the upper sliding member and the abutting surface of the lower sliding member, such holes may be formed on the abutting surface of the upper sliding member or the abutting surface of the lower sliding member. In this case, multiple storage portions can be non-regularly or regularly formed on the abutting surface free from the one storage portion and the n number of storage portion groups.

Meanwhile, although the embodiment concerns an example in which six hole groups are used as the n number of storage portion groups, the number of groups of storage portions in the present invention is not limited to six, and two to five or seven or more groups of storage portions can be used.

Also, although the embodiment concerns an example in which one set of storage portions h1 to h6 each selected from each of the six storage portion groups is non-linearly disposed in one direction with the center point O as a reference, two or more sets of storage portions may be non-linearly disposed in one direction or each of two or more sets of storage portions may be non-linearly disposed in each of two or more directions.

Although the embodiment concerns an example in which each of the six hole groups has sixfold rotational symmetry, each of the six hole groups may have twofold to fivefold, or sevenfold or more rotational symmetry instead. Alternatively, the six hole groups may have mutually different rotational symmetry, or at least one of the six hole groups may not have a symmetry.

Although the embodiment concerns an example in which all the holes h0 to h6 have the same dimension, the holes h0 to h6 may all have different dimensions instead, or at least some of the holes h0 to h6 may have different dimensions from those of the others.

Further, although the embodiment concerns an example in which the center points of the respective abutting surfaces of the upper and lower sliding members are used as reference points, the reference point in the present invention is not limited to these, and any point other than the center points of the abutting surfaces of the upper and lower sliding members can be used as a reference point.

Meanwhile, although the embodiment concerns an example in which a seismic isolation device according to the present invention is installed between a rack as an upper structure and a floor as a lower structure, a seismic isolation device according to the present invention can be installed between various upper structures and lower structures, not limited to a rack and a floor.

Also, although the embodiment concerns an example in which a seismic isolation device according to the present invention is applied to a rack of an automatic freezing storage, the present invention is applicable to other industrial equipment, not limited to an automatic freezing storage.

### Description of Reference Numerals

1 seismic isolation device
10 upper spherical panel (upper support member)
10 lower spherical panel (lower support member)
12b sliding surface (opposed surface)
20 sliding body (sliding component)
21 base portion
22 upper sliding member
22 lower sliding member
22a sliding surface (abutting surface)
23 solid lubricant material (lubricant material)
O center point (reference point)
h0 center hole (storage portion)
h1 to h6 hole (storage portion)
30 rack (upper structure)
31 floor (lower structure)

## Claims

1. A seismic isolation device to be disposed between an upper structure and a lower structure, comprising:
an upper support member and a lower support member disposed so as to be opposed to each other and having lubricant films formed on respective opposed surfaces thereof; and
a sliding component disposed between and in plane contact with the upper support member and the lower support member, the sliding component being slidable relative to the upper support member and the lower support member,
wherein
the sliding component includes
a base portion;
an upper sliding member disposed on an upper end portion of the base portion so as to be in plane contact with the upper support member, the upper sliding member having multiple storage portions that are open on an abutment surface that abuts on the upper support member, the multiple storage portions being filled with lubricant material; and
a lower sliding member disposed on a lower end portion of the base portion so as to be in plane contact with the lower support member, the lower sliding member having multiple storage portions that are open on an abutment surface that abuts on the lower support member, the multiple storage portions being filled with lubricant material.

2. The seismic isolation device according to claim 1, wherein
the multiple storage portions on the abutting surface of at least one of the upper sliding member and the lower sliding member include one storage portion disposed at a reference point of the one abutting surface and an n number (n being two or more) of storage portion groups including a plurality of storage portions equidistantly disposed along the n number of respective circles with the reference point as a center, and
at least one set of the storage portions each selected from each of the n number of storage portion groups is non-linearly disposed in at least one direction with the reference point as a reference, so that a width between a maximum value and a minimum value on a curved line indicating a change in a sum of distances traversing the storage portions in respective directions with the reference point as a reference is small, as compared with a case in which the one set of the storage portions is linearly disposed in the at least one direction.

3. The seismic isolation device according to claim 2, wherein
reference storage portions that make references for some storage portion groups of the n number of storage portion groups are linearly disposed on a reference line that extends in a diameter direction while passing through the reference point of the one abutting surface,
reference storage portions that make references for storage portion groups of the n number of storage portion groups other than the some storage portion groups are disposed so as to be displaced relative to the reference line in a circumferential direction by respective amounts corresponding to a plurality of mutually different predetermined angles, and
the plurality of predetermined angles are defined such that the one set of the storage portions is non-linearly disposed in the one direction.
